Europäisches Patentamt

**European Patent Office**

**Office européen des brevets**

(19)

(11) Veröffentlichungsnummer: **0 191 480**
A2

# (12) EUROPÄISCHE PATENTANMELDUNG

(21) Anmeldenummer: **86101788.7**

(22) Anmeldetag: **13.02.86**

(51) Int. Cl.⁴: **F 16 L 3/22**

(30) Priorität: **14.02.85 DE 8504051 U**

(43) Veröffentlichungstag der Anmeldung: **20.08.86**
**Patentblatt 86/34**

(84) Benannte Vertragsstaaten: **AT BE CH DE FR GB IT LI NL SE**

(71) Anmelder: **UNIMA Maschinenbau GmbH, Justus-von-Liebig-Strasse, D-6603 Sulzbach/Saar (DE)**

(72) Erfinder: **Fetsch, Rudolf, Dr.-Ing., Wiesenstrasse 72, D-6670 St. Ingbert (DE)**

(74) Vertreter: **Patentanwälte Phys. Bartels Dipl.-Ing. Fink Dr.-Ing. Held, Lange Strasse 51, D-7000 Stuttgart 1 (DE)**

(54) Schelle für Rohre, Schläuche oder dgl.

(57) Eine Schelle für Rohre, Schläuche oder dgl. hat zwei gleich ausgebildete Formhälften (1, 10), die jeweils eine dem aufzunehmenden Rohr, Schlauch oder dgl. angepasste halbkreisförmige Ausnehmung (2) aufweisen und die senkrecht zur Achse und ausserhalb der Ausnehmung angeordnete Durchgangsbohrungen (3, 4) für die Aufnahme jeweils eines Befestigungsgliedes haben. Um eine Verbindung zwischen Rohrschellen zu schaffen, welche ohne Klemmplatten auskommt, sind an zwei einander gegenüberliegenden Seiten der Schelle in Richtung von deren Breite oder Höhe sich erstreckende längliche Formschlussvorsprünge (5, 6, 12) und Formschlussausnehmungen (7, 8, 11) derart vorgesehen, dass zwei nebeneinander liegende Schellen mittels in Formschlussausnehmungen eingreifende Formschlussvorsprünge formschlüssig miteinander verbindbar sind.

European Patent Attorneys

**0 191 480**

−1−

Patentanwälte · Lange Straße 51 · D-7000 Stuttgart 1

Zugelassene Vertreter
beim Europäischen Patentamt

07.01.1985
Gm 5883
3537

UNIMA Maschinenbau GmbH, Justus-von-Liebig-Straße,
6603 Sulzbach-Neuweiler/Saar

"Schelle für Rohre, Schläuche oder dgl."

Die Erfindung bezieht sich auf eine Schelle entsprechend dem
Oberbegriff des Anspruches 1.

Eine bekannte Schelle der vorgenannten Art hat an den von den
kreisförmigen Einschnitten der Formhälften abgewandten Seiten
je eine quer zur Achse des Einschnittes angeordnete Klemmplatte.
Die beiden Klemmplatten werden durch außerhalb des Einschnittes
und senkrecht zu dessen Achse angeordnete Schrauben zusammengehalten (DE-GM 78 31 579).

Werden mehrere solcher Schellen übereinander und/oder nebeneinander angeordnet, so sind entsprechend groß ausgebildete Klemmplatten an der Oberseite und der Unterseite der aus verschiedenen
Schellen gebildeten Baueinheit vorgesehen.

Der vorliegenden Erfindung liegt die Aufgabe zugrunde, eine
Verbindung zwischen Rohrschellen zu schaffen, welche ohne Klemmplatten auskommt. Diese Aufgabe wird durch die Merkmale im
Kennzeichnungsteil des Anspruches 1 erfindungsgemäß gelöst.
Mittels der Formschlußvorsprünge und der Formschlußausnehmungen
lassen sich die Formhälten zweier nebeneinander angeordneter
Schellen ohne zusätzliches Verbindungsmittel miteinander ver-

Telefon (07 11) 29 63 10 u. 29 72 95
Telex 7 22 312 (patwo d)

Postgiro Stuttgart (BLZ 600 100 70) 448 42-704
Deutsche Bank Stuttgart (BLZ 600 700 70) 1 167 485

Telefonische Auskünfte und Aufträge sind
nur nach schriftlicher Bestätigung verbindlich.

binden. Für die aus mehreren Rohrschellen gebildete Einheit sind dann nur die Durchgangsbohrungen durchsetzende Verbindungsstangen oder dgl. vorgesehen, wobei je nach Anordnung der Formschlußvorsprünge oder der Formschlußausnehmungen mit wenig Verbindungsstangen ausgekommen werden kann.

Die Formschlußvorsprünge und die Formschlußausnehmungen können jeden beliebigen Querschnitt aufweisen, der eine Formschlußverbindung zwischen einem Formschlußvorsprung und einer Formschlußausnehmung gestattet. Die Merkmale des Anspruches 2 betreffen eine vorteilhafte Länge der Formschlußvorsprünge und der Formschlußausnehmungen und einen preisgünstigen und gut handhabbaren Querschnitt dieser Teile.

Die Merkmale der übrigen Ansprüche sind auf bevorzugte Ausbildungen gerichtet, wobei die Merkmale der Ansprüche 3 bis 4 jeweils für sich oder gemeinsam an einer Schelle vorgesehen werden können.

Weitere Vorteile ergeben sich aus der Beschreibung und der Zeichnung. In dieser sind zwei Schellen für Rohre, Schläuche oder dgl. als Ausführungsbeispiele des Gegenstandes der Erfindung jeweils im Schrägbild schematisch dargestellt. Es zeigen

Fig. 1    eine obere Formhälfte eines ersten Ausführungsbeispieles,

Fig. 2    eine gleich ausgebildete untere Formhälfte des ersten Ausführungsbeispieles,

Fig. 3    eine zwischen Rohrschellen anordenbare Verbindungsbüchse,

Fig. 4    eine obere Formhälfte des zweiten Ausführungsbeispiels,

Fig. 5    eine gleich ausgebildete untere Formhälfte des zweiten Ausführungsbeispieles.

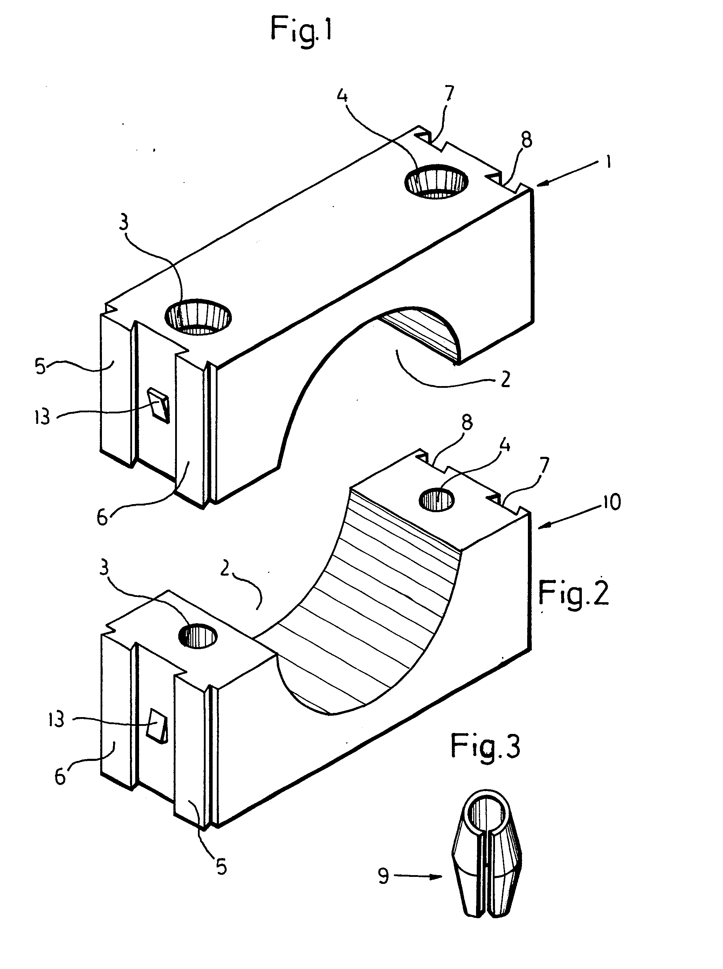

Die Formhälfte 1 nach Fig. 1 besteht aus Kunststoff, ist massiv
ausgebildet und hat etwa die Form einer Bogenbrücke mit einer
im Querschnitt halbkreisförmigen Ausnehmung 2 auf ihrer in
der Zeichnung unteren Seite. Abgesehen von der Ausnehmung 2
ist die Formhälfte 1 im wesentlichen quaderförmig ausgebildet.
Zu beiden Seiten der Ausnehmung 2 und senkrecht zu deren Achse
ist je eine Durchgangsbohrung 3 bzw. 4 vorgesehen, die auf
der Außenseite der Schelle jeweils kegelförmig erweitert ist.
Die Durchgangsbohrungen 3, 4 liegen in Achsrichtung der Ausnehmung 2 gesehen in der Mitte der Formhälfte 1.

An der in Fig. 1 linken Seite der Formhälfte 1 befinden sich
zwei im Querschnitt schwalbenschwanzförmige Formschlußvorsprünge
5 und 6, zwischen denen ein Abstand vorhanden ist. Auf der
gegenüberliegenden Seite der Formhälfte 1 sind in gleichem
Abstand wie die Formschlußvorsprünge 5 und 6 zwei im Querschnitt
ebenfalls schwalbenschwanzförmig ausgebildete Formschlußausnehmungen 7, 8 vorgesehen. Die Formschlußvorsprünge 5 und 6
einer Formhälfte passen in die Formschlußausnehmungen 7, 8
einer benachbarten Formhälfte. Die Formschlußvorsprünge 5 und
6 sowie die Formschlußausnehmungen 7 und 8 sind jeweils symmetrisch
zu der von den von den Achsen der Durchgangsbohrung 3, 4 bestimmten Ebene vorgesehen. Die Formschlußvorsprünge 5 und 6
sowie die Formschlußausnehmungen 7 und 8 verlaufen parallel
zu den Durchgangsbohrungen 3 und 4.

Eine in Figur 3 dargestellte Verbindungsbüchse 9 ist auf ihrer
Außenseite als Doppelkegel gestaltet, bei dem die größeren
Durchmesser einander zugewandt sind, und weist einen parallel
zu ihrer Achse verlaufenden durchgehendenn Schlitz auf. Der
Innendurchmesser der Verbindungsbüchse 9 entspricht dem der
Ausnehmung 2 benachbarten Durchmesser der Durchgangsbohrungen
3 und 4 wie in Figur 2 dargestellt.

Die Formhälfte 10 nach Figur 2 entspricht der Formhälfte 1
und ist in Figur 2 um eine senkrecht zur Achse der Ausnehmung
und senkrecht zu den Achsen der Durchgangsbohrungen 3 und 4 angeordnete Achse um einen Winkel von 180° geschwenkt dargestellt.

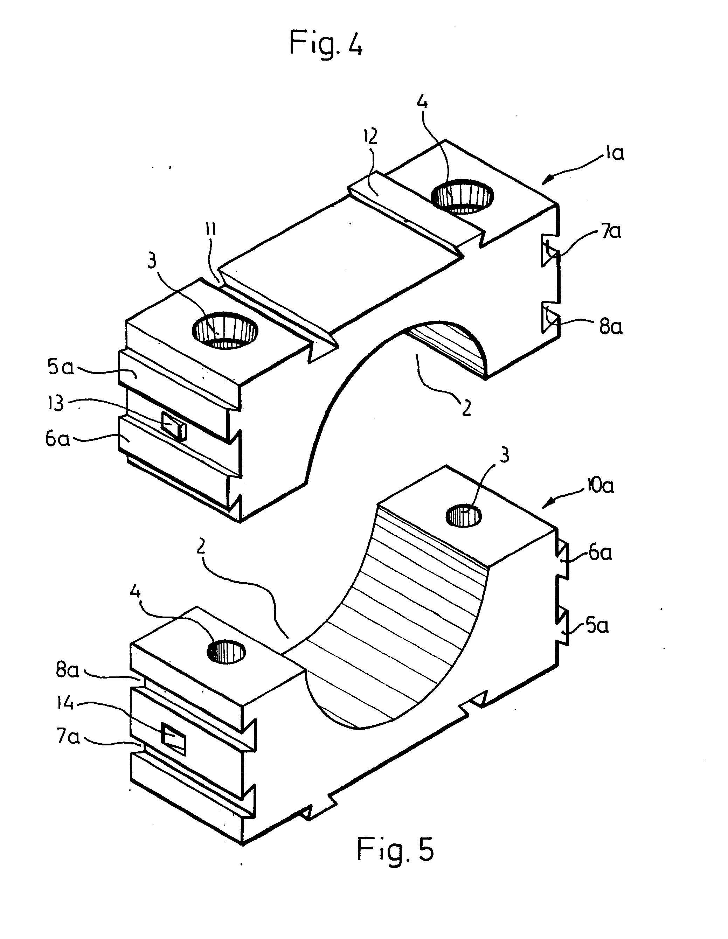

Das zweite Ausführungsbeispiel nach den Figuren 4 und 5 entspricht weitgehend dem ersten Ausführungsbeispiel und weist
für gleiche Teile dem ersten Ausführungsbeispiel entsprechende
Bezugszeichen auf, wobei Abwandlungen durch den Buchstaben
a gekennzeichnet sind. Die Formschlußvorsprünge 5a und 6a und
die Formschlußausnehmungen 7a und 8a sind bei der Formhälfte
1a parallel zur Achse der Ausnehmung 2 angeordnet. Zusätzlich
sind auf der in Fig. 4 oberen Seite zwischen den Durchgangsbohrungen 3 und 4 eine Formschlußausnehmung 11 und im Abstand
davon ein Formschlußvorsprung 12 vorgesehen. Die Ausnehmung
11 und der Vorsprung 12 verlaufen ebenfalls parallel zur Achse
der Ausnehmung 2.

Die Formhälfte 10a entspricht der Formhälfte 1a. Sie ist jedoch
zusätzlich um eine parallel zu den Achsen der Durchgangsbohrungen
3, 4 parallele Achse um 180° geschwenkt dargestellt, die in
der durch die Achsen der Durchgangsbohrungen 3, 4 bestimmten
Ebene liegt und die Achse der Ausnehmung 2 senkrecht schneidet.

Die aus den Formhälften 1a und 10a gebildete Schelle kann nicht
nur mit in der Zeichnung in gleicher Ebene angeordneten Formhälften mittels der Formschlußvorsprünge 5a, 6a und der Formschlußausnehmungen 7a, 8a miteinander verbunden werden, sondern
eine Verbindung ist auch bei lotrecht übereinander angeordneten
Schellen mit Hilfe der Formschlußausnehmungen 11 und der Formschlußvorsprünge 12 bei einander benachbarten Formhälften möglich. Einheiten aus mehreren Rohrschellen nach dem zweiten
Ausführungsbeispiel werden ebenfalls mittels nicht dargestellter
Gewindestangen oder dgl. zusammengehalten.

Die Formschlußvorsprünge 5, 6, 12 und die Formschlußausnehmungen
7, 8, 11 brauchen sich nicht über die ganze Breite oder über
die ganze Höhe der Schelle zu erstrecken, obgleich dies von
Vorteil ist.

**0 191 480**

6. Februar 1985 /3537
Gm 5883

Zur gegenseitigen Sicherung der Lage der mittels der Formschlußeinrichtung 5, 6; 7, 8 und 11; 12 miteinander verbundenen Formhälften 1, 10 dient eine im Bereich dieser Formschlußeinrichtung
angeordnete Rasteinrichtung 13, 14, die aus einer Rastnase
13 an der einen Formhälfte und einer mit dieser Rastnase zusammenwirkenden Rastausnehmung 14 an der benachbarten Formhälfte besteht.
Als Rastnasen 13 können keilartige, kuppenartige oder dgl.
Vorsprünge und als Rastausnehmungen den Rastnasen jeweils angepaßte Ausnehmungen vorgesehen sein.

European Patent Attorneys

**0 191 480**

Patentanwälte · Lange Straße 51 · D-7000 Stuttgart 1

−6−

Zugelassene Vertreter
beim Europäischen Patentamt

08.01.1985
Gm 5883
Ref.: 3537


UNIMA Maschinenbau GmbH, Justus-von-Liebig-Straße,
6603 Sulzbach/Saar


S c h u t z a n s p r ü c h e


1.    Schelle für Rohre, Schläuche oder dgl. mit zweigleich
      ausgebildeten Formhälften (1, 10), die jeweils eine
      dem aufzunehmenden Rohr, Schlauch oder dgl. angepaßte
      halbkreisförmige Ausnehmung (2) aufweisen und die
      senkrecht zur Achse und außerhalb der Ausnehmung
      angeordnete Durchgangsbohrungen (3, 4) für die Aufnahme jeweils eines Befestigungsgliedes haben, dadurch
      g e k e n n z e i c h n e t, daß an zwei einander
      gegenüberliegenden Seiten der Schelle in Richtung
      von deren Breite oder Höhe sich erstreckende längliche
      Formschlußvorsprünge (5, 6, 12) und Formschlußausnehmungen (7, 8, 11) derart vorgesehen sind, daß
      zwei nebeneinander liegende Schellen mittels in Formschlußausnehmungen eingreifende Formschlußvorsprünge
      formschlüssig miteinander verbindbar sind.


2.    Schelle nach Anspruch 1, dadurch g e k e n n z e i c h -
      n e t, daß der Formschlußvorsprung (5, 6, 12) und
      die Formschlußausnehmung (7, 8, 11) sich über die
      ganze Breite oder über die ganze Höhe der Schelle
      erstrecken, im Querschnitt jeweils schwalbenschwanzförmig ausgebildet und aneinander angepaßt sind.


Telefon (07 11) 29 63 10 u. 29 72 95        Postgiro Stuttgart (BLZ 600 100 70) 448 42-704        Telefonische Auskünfte und Aufträge sind
Telex 7 22 312 (patwo d)                    Deutsche Bank Stuttgart (BLZ 600 700 70) 1167485      nur nach schriftlicher Bestätigung verbindlich.

3.      Schelle nach Anspruch 1 oder 2, dadurch g e k e n n -
        z e i c h n e t, daß auf der einen Seite der Formhälfte
        (1, 10) zwei Formschlußvorsprünge (5, 6) und auf
        der anderen Seite zwei Formschlußausnehmungen (7,
        8) vorgesehen sind.

4.      Schelle nach einem der vorhergehenden Ansprüche,
        dadurch g e k e n n z e i c h n e t, daß auf einander
        gegenüberliegenden Seiten der Rohrschelle je ein
        Formschlußvorsprung (12) und je eine Formschlußausnehmung (11) vorgesehen sind und daß der Formschlußvorsprung einer Formschlußausnehmung gegenüberliegt
        und umgekehrt.

5.      Schelle nach einem der vorhergehenden Ansprüche,
        dadurch g e k e n n z e i c h n e t, daß eine Verbindungs-
        büchse (9) zum Ausrichten zweier übereinander angeordneter Formhälften (1, 10) zweier übereinander
        angeordneter Schellen vorgesehen ist.

6.      Schelle nach Anspruch 5, dadurch g e k e n n z e i c h -
        n e t, daß die Verbindungsbüchse (9) einen achsparallelen
        Spalt aufweist.

7.      Schelle nach Anspruch 5 oder 6, dadurch g e k e n n -
        z e i c h n e t, daß die Verbindungsbüchse (9) auf
        ihrer Außenseite einen Doppelkegel hat, dessen im
        Durchmesser größere Seiten einander benachbart sind,
        und daß die Durchgangsbohrung (3, 4) der Formhälfte
        (1, 10) auf ihrer von der Ausnehmung (2) abgewandten
        Seite dem Kegel der Verbindungsbüchse angepaßt ist.

8.      Schelle nach einem der vorhergehenden Ansprüche,
        dadurch g e k e n n z e i c h n e t, daß eine aus
        Rastnase (13) und Rastausnehmung (14) bestehende
        Rasteinrichtung (13, 14) zur Sicherung der gegenseitigen Lage zweier mittels der Formschlußeinrichtung
        (5, 6, 7, 8, 11, 12) miteinander verbundener Formhälften (1, 10) vorgesehen ist.

Fig.1

Fig.2

Fig.3

Fig. 4

Fig. 5